# EUROPÄISCHE PATENTANMELDUNG

(11) **EP 4 588 696 A1**
(43) Veröffentlichungstag der Anmeldung: **23.07.2025**
(21) Anmeldenummer: 25151394.1
(22) Anmeldetag: 13.01.2025
(51) Int. Cl.: B60G 17/019, G01B 5/00, G01B 11/16, G01B 11/14

(54) **FAHRZEUGBAUTEIL, FAHRZEUG UND VERFAHREN**

(30) Priorität: 17.01.2024 DE 102024101230
(71) Anmelder: ZF CV Systems Global GmbH, 3006 Bern (CH)
(72) Erfinder: LUCAS, Johann, 31319 Sehnde (DE); TOPIC, Oliver, 30459 Hannover (DE); KURT, Yusuf, 30519 Hannover (DE); BERTOLINA, Guillermo, 1150 Woluwe-Saint-Pierre (BE)
(74) Vertreter: Von Ahsen, Nils Thomas

(57) **Zusammenfassung**

Die Erfindung betrifft ein Fahrzeugbauteil zur Bestimmung eines Abstands zwischen einem Fahrgestell (11) und einer Fahrzeugachse (12), wobei das Fahrzeugbauteil in Abhängigkeit von dem genannten Abstand eine Formänderung erfährt. Vorgesehen ist ein Dehnungssensor (16), mit dem zumindest mittelbar die Formänderung des Fahrzeugbauteils detektierbar ist.

## Beschreibung

Die Erfindung betrifft ein Fahrzeugbauteil zur Bestimmung des Abstands zwischen einem Fahrgestell und einer Fahrzeugachse, wobei das Fahrzeugbauteil in Abhängigkeit von dem genannten Abstand eine Formänderung erfährt. Außerdem betrifft die Erfindung ein Fahrzeug sowie ein Verfahren zur Bestimmung des Abstands zwischen Fahrgestell und Fahrzeugachse.

Fahrzeuge mit Achsen, insbesondere Nutzfahrzeuge, können Einrichtungen zur Bestimmung eines Abstands zwischen Fahrgestell und Achsen aufweisen. Als zum Fahrgestell gehörig wird hier auch ein Fahrzeugaufbau verstanden.

Typischerweise sind die Achsen am Fahrgestell in der Höhe beweglich gelagert und dabei mit Federn und Dämpfern versehen. Mit Luftfedern versehene Achsen sind nicht nur beweglich, sondern auch in der Höhe verstellbar. Als Dämpfer sind häufig sogenannte Zweirohr-Schwingungsdämpfer vorgesehen. Die Schwingungsdämpfer werden auch als Stoßdämpfer bezeichnet. Bei Krafteinwirkung kann sich die Form des Dämpfers ändern.

Ein aktueller Abstand zwischen Fahrgestell und Fahrzeugachsen kann in vielerlei Fahrsituationen von Interesse sein, insbesondere beim Beladen, Entladen, unter Brücken oder in Tunneln, in Fahrsituationen mit hohen Querkräften. Weit verbreitet ist eine mechanische Detektierung des Abstands mittels eines Hebels. Aus dem Winkel des Hebels ergibt sich der Abstand. Für eine elektronische Verarbeitung der Abstandsinformation muss der Winkel detektiert und in eine elektrische Größe umgewandelt werden.

Aufgabe der vorliegenden Erfindung ist die Schaffung eines neuartigen Fahrzeugbauteils zur Bestimmung eines Abstands zwischen Fahrgestell und Fahrzeugachse. Daneben ist ein Ziel ein möglichst geringer mechanischer Aufwand.

Zur Lösung der Aufgabe weist ein Fahrzeugbauteil zur Bestimmung eines Abstands zwischen Fahrgestell und Fahrzeugachse eines Fahrzeugs, insbesondere eines Nutzfahrzeugs, einen Dehnungssensor auf, mit dem zumindest mittelbar eine Formänderung des Fahrzeugbauteils detektierbar ist, während das Fahrzeugbauteil seine Formänderung in Abhängigkeit von einer Änderung des Abstands erfährt. Als Formänderung wird auch eine Änderung einer Größe des Fahrzeugbauteils, insbesondere eine Längenänderung, angesehen. Dehnungssensoren sind in vielerlei Bauarten verfügbar, auch mit elektrischem Anschluss zur Übergabe eines elektrischen, von einer Dehnung abhängigen Signals an ein Steuergerät.

Nach einem weiteren Gedanken der Erfindung kann der Dehnungssensor ein optischer Sensor sein. Dazu zählt beispielsweise auch ein optisch wirkender Dehnungsmessstreifen. Der optische Sensor ist weitgehend unabhängig von elektrischen und magnetischen Feldern.

Nach einem weiteren Gedanken der Erfindung kann der Dehnungssensor ein faseroptischer Sensor mit Faser-Bragg-Gitter sein. Auch derartige Sensoren sind verbreitet und bekannt. In den faseroptischen Sensor eingespeistes Licht wird am Faser-Bragg-Gitter zu einem kleinen Teil und von der Wellenlänge abhängig reflektiert. Die Wellenlänge ändert sich in Abhängigkeit von einer Formänderung des faseroptischen Sensors. Der Dehnungssensor, insbesondere der faseroptische Sensor, kann ein Dehnungsmessstreifen sein. Dehnungsmessstreifen sind in allen Variationen und für die verschiedensten Anwendungen verfügbar. Auch kann der faseroptische Sensor ein Federelement sein oder mit einem Federelement verbunden sein.

Nach einem weiteren Gedanken der Erfindung kann der Dehnungssensor an einem elastisch verformbaren Sensorträger angeordnet sein und zumindest mittelbar dessen Verformung detektieren, wobei sich der Sensorträger in Abhängigkeit vom Abstand zwischen Fahrzeugachse und Fahrgestell verformt. Der Sensorträger kann an besondere Anforderungen des Dehnungssensors angepasst sein. Der Sensorträger ist insbesondere so ausgebildet und angeordnet, dass eine Längenänderung des Fahrzeugbauteils in eine Biegung des Sensorträgers umgewandelt wird. Ein Dehnungssensor auf einer Oberfläche des Sensorträgers kann die Biegung detektieren.

Nach einem weiteren Gedanken der Erfindung kann der Dehnungssensor entlang eines Abschnitts des Sensorträgers mit diesem verbunden sein. Dadurch kann der Dehnungssensor eine Formänderung des Sensorträgers besonders gut detektieren.

Nach einem weiteren Gedanken der Erfindung kann der Sensorträger ein Federelement, insbesondere eine Spiralfeder, sein. Der Dehnungssensor kann eine Längenänderung des Federelements oder eine Biegung desselben detektieren, je nach Bauart des Dehnungssensors und/oder des Federelements.

Nach einem weiteren Gedanken der Erfindung kann der Sensorträger einerseits mit einem zur Verbindung mit dem Fahrgestell vorgesehenen Gestell-Teil des Fahrzeugbauteils und andererseits mit einem zur Verbindung mit der Fahrzeugachse vorgesehenen Achs-Teil des Fahrzeugbauteils verbunden sein. Alle Verbindungen können auch mittelbar vorgesehen sein.

Nach einem weiteren Gedanken der Erfindung kann das Fahrzeugbauteil ein zur Verbindung mit dem Fahrgestell vorgesehenes Gestell-Teil und ein zur Verbindung mit der Fahrzeugachse vorgesehenes Achs-Teil aufweisen, wobei das Gestell-Teil relativ zum Achs-Teil bewegbar ist und diese Bewegung mit dem Dehnungssensor detektierbar ist. Alle Verbindungen können auch mittelbar vorgesehen sein. Auch kann die Detektierung mittelbar erfolgen. Gestell-Teil ist beispielsweise eine Kolbenstange eines Teleskop-Stoßdämpfers. Achs-Teil ist beispielsweise ein Außenrohr des Teleskop-Stoßdämpfers.

Nach einem weiteren Gedanken der Erfindung kann der Dehnungssensor einerseits mit dem Gestell-Teil und andererseits mit dem Achs-Teil verbunden sein. Die Dehnung ist dann relativ direkt messbar.

Nach einem weiteren Gedanken der Erfindung kann das Gestell-Teil eine Kolbenstange eines Stoßdämpfers und das Achs-Teil ein Gehäuse einer Arbeitskammer des Stoßdämpfers sein.

Nach einem weiteren Gedanken der Erfindung kann das Fahrzeugbauteil als Stoßdämpfer ausgebildet sein. Vorzugsweise handelt es sich um einen Teleskop-Stoßdämpfer, insbesondere einen Zweirohr-Teleskopdämpfer. Die Längenänderung des Teleskop-Stoßdämpfers ist mit dem Dehnungssensor mittelbar oder unmittelbar detektierbar.

Nach einem weiteren Gedanken der Erfindung kann der Stoßdämpfer eine mit einem Fluid gefüllte Arbeitskammer und eine teilweise in das Fluid eintauchende Kolbenstange aufweisen, wobei mit dem Dehnungssensor eine Veränderung der Position der Kolbenstange relativ zur Arbeitskammer detektierbar ist. Die Detektierung der Positionsänderung kann auch mittelbar erfolgen.

Nach einem weiteren Gedanken der Erfindung können der Dehnungssensor oder ein Sensorträger mit Dehnungssensor um eine Kolbenstange eines Stoßdämpfers herum angeordnet sein oder neben der Kolbenstange. Teleskop-Stoßdämpfer können um die Kolbenstange herum eine Staubschutzhaube aufweisen. Innerhalb der Staubschutzhaube kann Raum für die Anordnung des Sensorträgers vorhanden. Sensorträger und Dehnungssensor sind dadurch geschützt.

Gegenstand der Erfindung ist auch ein Fahrzeug mit Fahrzeugachsen und Fahrgestell und einem Fahrzeugbauteil wie vorhergehend beschrieben. Insbesondere kann es sich um ein Fahrzeug mit Luftfederung und/oder einer Höhenverstellung für das Fahrgestell handeln.

Ebenfalls Gegenstand der Erfindung ist ein Verfahren zur Bestimmung des Abstands zwischen Fahrgestell und Fahrzeugachse durch Messung einer vom genannten Abstand abhängigen Dehnung eines elastischen Bauteils. Die Messung der Dehnung eines elastischen Bauteils ist kostengünstig mit verfügbaren Sensoren möglich. Dabei kann ein Fahrzeugbauteil wie vorhergehend beschrieben betrieben werden.

Nach einem weiteren Gedanken der Erfindung kann das elastische Bauteil an oder in einem Stoßdämpfer angeordnet sein. Stoßdämpfer - auch als Schwingungsdämpfer bezeichnet - ändern typischerweise bei Einwirkung einer Kraft ihre Form. Mit der Formänderung kann eine Dehnung einhergehen, nämlich an dem Bauteil, welches am oder im Stoßdämpfer angeordnet ist. Das Bauteil kann an die Messung der Dehnung optimal angepasst sein.

Nach einem weiteren Gedanken der Erfindung kann das elastische Bauteil ein Dehnungssensor oder ein mit einem Dehnungssensor verbundener Sensorträger sein. Verfügbare Dehnungssensoren können hoch integriert sein und bereits intern ein Bauteil aufweisen, dessen Dehnung detektiert wird. Alternativ ist zusätzlich ein Sensorträger vorhanden, dessen Dehnung vom Dehnungssensor detektiert wird.

Nach einem weiteren Gedanken der Erfindung kann der Sensorträger ein Federelement sein. Insbesondere kann das Federelement eine Spiralfeder sein. Eine Spiralfeder ermöglicht geringe Formänderungen und die Verwendung üblicher Dehnungssensoren.

Nach einem weiteren Gedanken der Erfindung kann der Dehnungssensor ein faseroptischer Sensor mit Faser-Bragg-Gitter sein. Es handelt sich um einen verfügbaren Dehnungssensor mit Schnittstelle zur Übergabe der ermittelten Daten, insbesondere an ein Steuergerät.

Nach einem weiteren Gedanken der Erfindung kann der Dehnungssensor ein Dehnungsmessstreifen sein. Auch dabei handelt es sich um einen verfügbaren Dehnungssensor mit Schnittstelle zur Übergabe der ermittelten Daten.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 eine vereinfachte Darstellung eines Fahrzeugs mit zwei Achsen in einer Draufsicht,
Fig. 2 eine vereinfachte Darstellung des Fahrzeugs gemäß Fig. 1 in einer Vorderansicht,
Fig. 3 ein erstes Ausführungsbeispiel eines Fahrzeugbauteils, nämlich eines Stoßdämpfers, in eingefahrener Position,
Fig. 4 das Fahrzeugbauteil gemäß Fig. 3 in ausgefahrener Position,
Fig. 5 ein zweites Ausführungsbeispiel eines Fahrzeugbauteils, nämlich eines Stoßdämpfers, in eingefahrener Position,
Fig. 6 das Fahrzeugbauteil gemäß Fig. 5 in ausgefahrener Position,
Fig. 7 ein drittes Ausführungsbeispiel eines Fahrzeugbauteils, nämlich eines Stoßdämpfers, in eingefahrener Position,
Fig. 8 das Fahrzeugbauteil gemäß Fig. 7 in ausgefahrener Position.

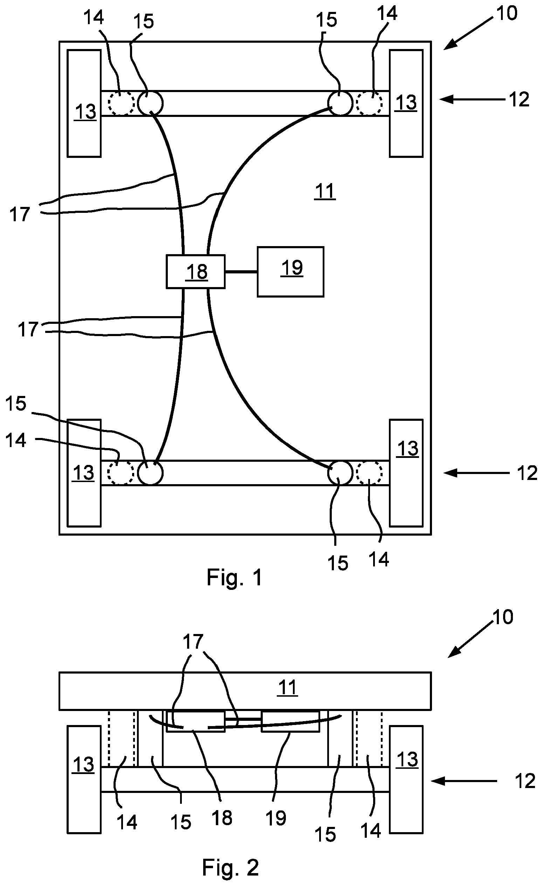

Es wird zunächst Bezug genommen auf die Fig. 1 und 2. Ein Fahrzeug 10 weist ein Fahrgestell 11 mit zwei Achsen 12 auf. An jeder Achse 12 sind zwei Räder 13 angeordnet. Die Achsen 12 sind mit Luftfedern 14 und Stoßdämpfern 15 am Fahrgestell 11 abgestützt. Dabei ist jedem Rad 13 eine Luftfeder 14 mit Stoßdämpfer 15 zugeordnet. Nicht dargestellt, aber gleichwohl vorhanden, sind Fahrzeugaufbau, Achslenker, Bremsen, gegebenenfalls ein Antrieb und weitere für die Funktion des Fahrzeugs 10 erforderliche Bauelemente.

Die Stoßdämpfer 15 sind längenveränderliche Fahrzeugbauteile, führen also eine Formänderung durch, nämlich in Abhängigkeit vom Druck in den Luftfedern 14, einer Fahrzeugmasse und im Fahrbetrieb von dynamisch wirksamen Kräften und der Beschaffenheit einer Fahrbahn. In den Stoßdämpfern 15 sind Dehnungssensoren 16 angeordnet (in den Figuren 1 und 2 nicht gezeigt), mit denen die Längenänderung/Formänderung der Stoßdämpfer 15 gemessen wird. Elektrische Signale der Dehnungssensoren 16 werden über Leitungen 17 einer Auswertungseinheit 18 zugeführt und dort verarbeitet, sodass für jeden Stoßdämpfer 15 eine Höheninformation entsprechend dem Abstand des Fahrgestell 11 zu den Achsen 12 vorliegt. Die Höheninformationen werden von der Auswertungseinheit 18 an ein zentrales Steuergerät 19 übergeben und dort verwertet. Mit dem Steuergerät 19 wird beispielsweise der Druck in den Luftfedern 14 gesteuert.

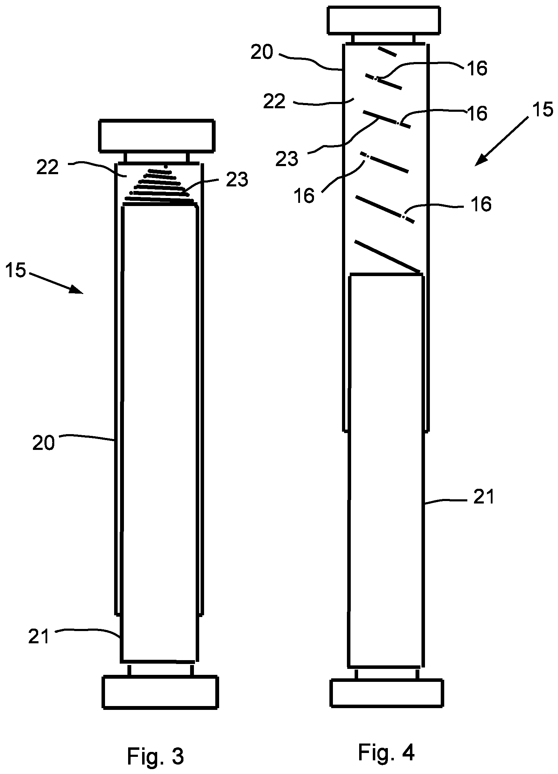

Fig. 3 und 4 zeigen ein erstes Ausführungsbeispiel des Stoßdämpfers 15 mit Dehnungssensoren 16. Der Stoßdämpfer 15 in hier nicht näher dargestellter Bauart weist ein in einem Staubschutz 20 verschiebbares Außenrohr 21 sowie weitere hier nicht gezeigte übliche Bauelemente auf. Im Staubschutz 20 ist außerhalb des Außenrohrs 21 ein freies, veränderliches Innenvolumen 22 vorhanden. Letzteres ist ausreichend groß, um ein elastisches Bauteil aufzunehmen, welches hier eine Spiralfeder 23 ist. Fig. 3 zeigt einen maximal zusammengeschobenen Zustand des Stoßdämpfers 15 und Fig. 4 einen maximal ausgefahrenen Zustand.

Die Spiralfeder 23 ist Träger für die Dehnungssensoren 16. Konkret kann die Spiralfeder 23 selbst ein faseroptischer Sensor mit Faser-Bragg-Gittern sein, wobei die Faser-Bragg-Gitter die Funktion der Dehnungssensoren 16 darstellen. Alternativ ist die Spiralfeder 23 hohl - wie ein spiralförmig gewickeltes Rohr - und nimmt den faseroptischen Sensor mit den Faser-Bragg-Gittern in sich auf. Weiterhin alternativ ist die Spiralfeder 23 massiv oder hohl und dient lediglich als Führung für einen außen aufliegenden faseroptischer Sensor mit Faser-Bragg-Gittern.

Von den Faser-Bragg-Gittern führen in Fig. 3 und 4 nicht dargestellte elektrische Leitungen zur Auswertungseinheit 18, analog zu den Leitungen 17 in Fig. 1 und 2. Die Auswertung der von den Faser-Bragg-Gittern kommenden Signale erfolgt in bekannter Weise und ermöglicht eine signaltechnische Darstellung einer Änderung der Biegung des faseroptischen Sensors und damit der Längenänderung des Stoßdämpfers 15.

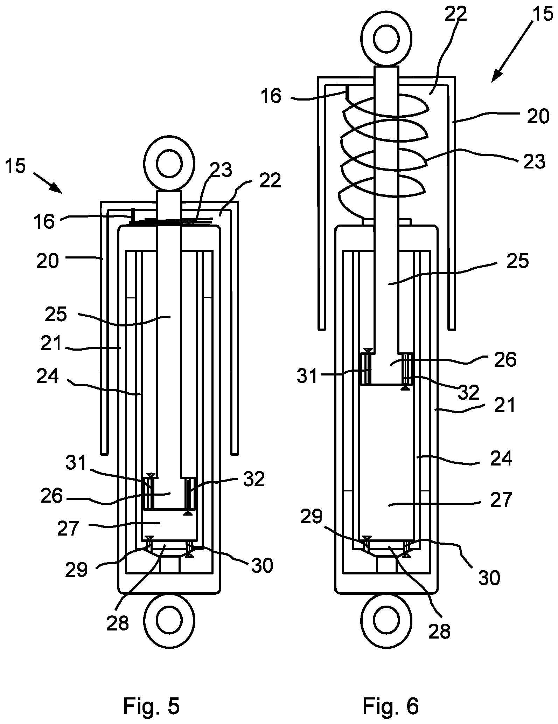

Fig. 5 und 6 zeigen ein zweites Ausführungsbeispiel des Stoßdämpfers 15 mit Dehnungssensor 16. Der Stoßdämpfer 15 ist hier etwas detaillierter dargestellt, nämlich mit Staubschutz 20, Außenrohr 21, Innenrohr 24, Kolbenstange 25, Arbeitskolben 26 und Arbeitskammer 27. Im Boden 28 der Arbeitskammer 27 sind Bodenventile 29, 30 und im Arbeitskolben 26 sind Kolbenventile 31, 32 angeordnet. Es handelt sich um den üblichen Aufbau eines sogenannten Zweirohrstoßdämpfers.

Zwischen Staubschutz 20 und Außenrohr 21 ist wiederum das freie, veränderliche Innenvolumen 22 mit Spiralfeder 23 erkennbar. Die Spiralfeder 23 ist hier koaxial zur Kolbenstange 25 angeordnet und mit einem Zug oder Druck sensierenden Dehnungssensor 16 versehen, vorzugsweise an einem oberen Ende, also insbesondere am Staubschutz 20. Insbesondere kann es sich bei dem Dehnungssensor 16 in diesem Ausführungsbeispiel um einen Dehnungsmessstreifen handeln. Der Dehnungsmessstreifen detektiert die veränderliche Biegung der die Kolbenstange umgebenden Spiralfeder 23. Dabei kann der Dehnungsmessstreifen insbesondere außen auf einen oberen Endabschnitt der Spiralfeder 23 aufgebracht, aber auch an anderer Stelle der Spiralfeder 23 vorgesehen sein.

Vom Dehnungsmessstreifen führt eine in den Fig. 5 und 6 nicht gezeigte elektrische Leitung zur Auswertungseinheit 18, analog zu den Leitungen 17 in Fig. 1 und 2. Die Auswertung der vom Dehnungsmessstreifen kommenden Signale erfolgt in bekannter Weise und ermöglicht eine signaltechnische Darstellung einer Änderung der auf die Spiralfeder 23 wirkenden Kraft und damit der Längenänderung des Stoßdämpfers 15.

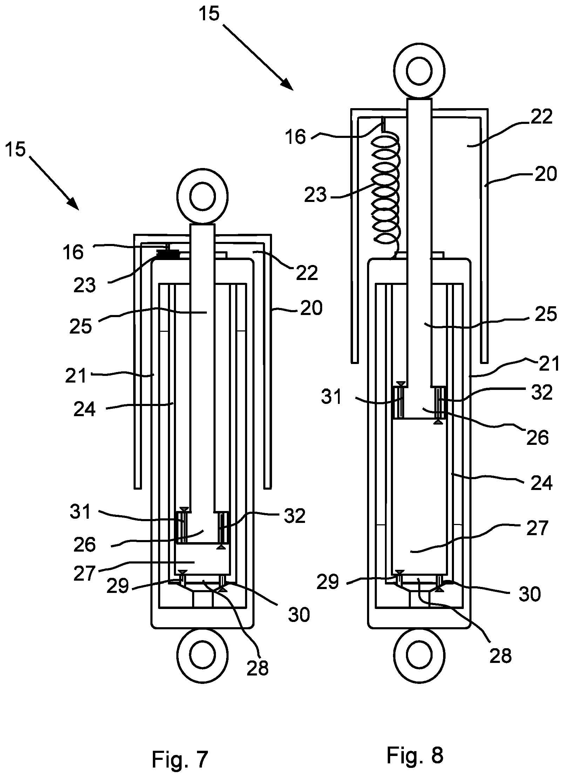

Fig. 7 und 8 zeigen ein drittes Ausführungsbeispiel des Stoßdämpfers 15 mit Dehnungssensor 16. Der Aufbau des Stoßdämpfers 15 entspricht dem zweiten Ausführungsbeispiel der Fig. 5 und 6. Lediglich die Spiralfeder 23 ist nicht koaxial zur Kolbenstange 25, sondern neben derselben und insbesondere achsparallel zur Kolbenstange 25 angeordnet. Auch hier ist die Spiralfeder 23 an einem Ende mit einem Zug oder Druck sensierenden Dehnungssensor 16 versehen, insbesondere an dessen oberem Ende.

Anstelle der Spiralfeder 23 können auch andere elastisch verformbare Bauteile oder Sensorträger verwendet werden. Der Dehnungssensor 16 kann auch selbst das elastisch verformbare Bauteil oder zumindest einen Abschnitt desselben darstellen.

Die Stoßdämpfer 15 sind als Fahrzeugbauteile zwischen dem Fahrgestell 11 und den Achsen 12 angeordnet. Dabei ist jeweils die Kolbenstange 25 mit Staubschutz 20 zur Verbindung mit dem Fahrgestell 11 vorgesehen und kann insoweit als Gestell-Teil des Stoßdämpfers 15 bezeichnet werden. Am anderen Ende des Stoßdämpfers 15 ist das Außenrohr 21 mit Innenrohr 24 und Arbeitskammer 25 mit einer Achse 12 verbunden und kann insoweit als Achs-Teil des Stoßdämpfers 15 bezeichnet werden.

### Bezugszeichenliste als Teil der Beschreibung:

- 10: Fahrzeug
- 11: Fahrgestell
- 12: Achsen
- 13: Räder
- 14: Luftfedern
- 15: Stoßdämpfer
- 16: Dehnungssensoren
- 17: Leitungen
- 18: Auswertungseinheit
- 19: Steuergerät
- 20: Staubschutz
- 21: Außenrohr
- 22: Innenvolumen
- 23: Spiralfeder
- 24: Innenrohr
- 25: Kolbenstange
- 26: Arbeitskolben
- 27: Arbeitskammer
- 28: Boden
- 29: Bodenventil
- 30: Bodenventil
- 31: Kolbenventil
- 32: Kolbenventil

## Patentansprüche

1. Fahrzeugbauteil (15) zur Bestimmung eines Abstands zwischen einem Fahrgestell (11) und einer Fahrzeugachse (12) eines Fahrzeugs, wobei das Fahrzeugbauteil (15) in Abhängigkeit von einer Änderung des Abstands eine Formänderung erfährt, **gekennzeichnet durch** einen Dehnungssensor (16), mit dem zumindest mittelbar die Formänderung des Fahrzeugbauteils (15) detektierbar ist.

2. Fahrzeugbauteil nach Anspruch 1, **dadurch gekennzeichnet, dass** der Dehnungssensor (16) ein optischer Sensor ist.

3. Fahrzeugbauteil nach Anspruch 1 oder 2, **dadurch gekennzeichnet, dass** der Dehnungssensor (16) ein faseroptischer Sensor mit Faser-Bragg-Gitter ist.

4. Fahrzeugbauteil nach einem der Ansprüche 1 bis 3, **dadurch gekennzeichnet, dass** der Dehnungssensor (16) ein Dehnungsmessstreifen ist.

5. Fahrzeugbauteil nach einem der Ansprüche 1 bis 4, **dadurch gekennzeichnet, dass** der Dehnungssensor (16) an einem elastisch verformbaren Sensorträger (23) angeordnet ist und zumindest mittelbar dessen Verformung detektiert, wobei sich der Sensorträger (23) in Abhängigkeit vom Abstand zwischen Fahrzeugachse (12) und Fahrgestell (11) verformt.

6. Fahrzeugbauteil nach Anspruch 5, **dadurch gekennzeichnet, dass** der Dehnungssensor (16) entlang eines Abschnitts des Sensorträgers (23) mit diesem verbunden ist.

7. Fahrzeugbauteil nach Anspruch 5 oder 6, **dadurch gekennzeichnet, dass** der Sensorträger (23) ein Federelement, insbesondere eine Spiralfeder (23), ist.

8. Fahrzeugbauteil nach einem der Ansprüche 5 bis 7, **dadurch gekennzeichnet, dass** der Sensorträger (23) einerseits mit einem zur Verbindung mit dem Fahrgestell (11) vorgesehenen Gestell-Teil (25) des Fahrzeugbauteils und andererseits mit einem zur Verbindung mit der Fahrzeugachse (12) vorgesehenen Achs-Teil (21) des Fahrzeugbauteils verbunden ist.

9. Fahrzeugbauteil nach einem der Ansprüche 1 bis 8, **dadurch gekennzeichnet, dass** das Gestell-Teil (25) zur Verbindung mit dem Fahrgestell (11) vorgesehen ist und das Achs-Teil (21) zur Verbindung mit der Fahrzeugachse (12) vorgesehen ist, wobei das Gestell-Teil (25) relativ zum Achs-Teil (21) bewegbar ist und diese Bewegung mit dem Dehnungssensor (16) detektierbar ist.

10. Fahrzeugbauteil nach Anspruch 9, **dadurch gekennzeichnet, dass** der Dehnungssensor (16) einerseits mit dem Gestell-Teil (25) und andererseits mit dem Achs-Teil (21) verbunden ist.

11. Fahrzeugbauteil nach einem der Ansprüche 8 bis 10, **dadurch gekennzeichnet, dass** das Gestell-Teil (25) eine Kolbenstange (25) eines Stoßdämpfers (15) und das Achs-Teil (21) ein Gehäuse einer Arbeitskammer (27) des Stoßdämpfers (15) ist.

12. Fahrzeugbauteil nach einem der Ansprüche 1 bis 11, **gekennzeichnet durch** eine Ausbildung als Stoßdämpfer (15)

13. Fahrzeugbauteil nach Anspruch 12, **dadurch gekennzeichnet, dass** der Stoßdämpfer (15) eine mit einem Fluid gefüllte Arbeitskammer (27) und eine teilweise in das Fluid eintauchende Kolbenstange (25) aufweist, wobei mit dem Dehnungssensor (16) eine Veränderung der Position der Kolbenstange (25) relativ zur Arbeitskammer (27) detektierbar ist.

14. Fahrzeugbauteil nach einem der Ansprüche 11 bis 13, **dadurch gekennzeichnet, dass** der Dehnungssensor (16) oder ein Sensorträger (23) mit Dehnungssensor (16) um eine Kolbenstange (25) des Stoßdämpfers (15) herum oder neben der Kolbenstange (25) angeordnet ist.

15. Fahrzeug mit Fahrzeugachsen (12) und Fahrgestell (11) und einem Fahrzeugbauteil nach einem der Ansprüche 1 bis 14.

16. Verfahren zur Bestimmung des Abstands zwischen Fahrgestell (11) und Fahrzeugachse (12) durch Messung einer vom genannten Abstand abhängigen Dehnung eines elastischen Bauteils (23, 16).

17. Verfahren nach Anspruch 16, **dadurch gekennzeichnet, dass** das elastische Bauteil (23, 16) an oder in einem Stoßdämpfer (15) angeordnet ist.

18. Verfahren nach Anspruch 16 oder 17, **dadurch gekennzeichnet, dass** das elastische Bauteil ein Dehnungssensor (16) oder ein mit einem Dehnungssensor (16) verbundener Sensorträger (23) ist.

19. Verfahren nach Anspruch 18, **dadurch gekennzeichnet, dass** der Sensorträger (23) ein Federelement, insbesondere eine Spiralfeder (23), ist.

20. Verfahren nach Anspruch 18 oder 19, **dadurch gekennzeichnet, dass** der Dehnungssensor (16) ein faseroptischer Sensor mit Faser-Bragg-Gitter ist.

21. Verfahren nach Anspruch 18 oder 19, **dadurch gekennzeichnet, dass** der Dehnungssensor (16) ein Dehnungsmessstreifen ist.
